# EUROPÄISCHE PATENTSCHRIFT

(11) **EP 2 297 537 B1**
(45) Veröffentlichungstag und Bekanntmachung des Hinweises auf die Patenterteilung: **19.06.2013**
(21) Anmeldenummer: 09776988.9
(22) Anmeldetag: 07.07.2009
(51) Int. Cl.: F28D 1/03, F28F 1/02, F28F 21/08, B21K 1/00, B21C 37/14

(54) **WÄRMEÜBERTRAGER, INSBESONDERE WÄRMEÜBERTAGER EINES KRAFTFAHRZEUGES, UND VERFAHREN ZUM HERSTELLEN EINES KÜHLROHRES EINES WÄRMEÜBERTRAGERS**
HEAT EXCHANGER, IN PARTICULAR HEAT EXCHANGER OF A MOTOR VEHICLE, AND METHOD FOR PRODUCING A COOLING PIPE OF A HEAT EXCHANGER
ÉCHANGEUR THERMIQUE, EN PARTICULIER ÉCHANGEUR THERMIQUE D'UN VÉHICULE AUTOMOBILE, ET PROCÉDÉ DE FABRICATION D'UN TUBE DE REFROIDISSEMENT D'UN ÉCHANGEUR THERMIQUE

(30) Priorität: 07.07.2008 DE 102008031614
(43) Veröffentlichungstag der Anmeldung: 23.03.2011
(73) Patentinhaber: Behr GmbH & Co. KG, 70469 Stuttgart (DE)
(72) Erfinder: KOCH, Hans, 71254 Ditzingen (DE); PFITZER, Matthias, 73779 Deizisau (DE)
(74) Vertreter: Grauel, Andreas
(86) Internationale Anmeldenummer: PCT/EP2009/004884
(87) Internationale Veröffentlichungsnummer: WO 2010/003623

(56) Entgegenhaltungen:
- EP-A- 0 637 474
- EP-A- 1 645 830
- WO-A-2008/078598
- US-A1- 2006 102 328
- US-B1- 6 298 910

## Beschreibung

Die Erfindung betrifft einen Wärmeübertrager nach dem Oberbegiff des Anspruchs 1. So ein Wärmetanscher ist aus EP 1645 830 A1 bekannt. Des Weiteren betrifft die Erfindung ein Verfahren zum Herstellen eines Kühlrohres eines Wärmeübertragers, bei welchem ein Bandmaterial mit wenigstens einer Sicke versehen und bei welchem das Bandmaterial zu einem Kühlrohr mit wenigstens einer Sicke gebogen sowie zusammen gefügt wird.

Gattungsgemäße Wärmeübertrager mit Kühlrohren und Sammelkästen sind aus dem Stand der Technik gut bekannt und werden überwiegend im Kraftfahrzeugbereich eingesetzt.

Insbesondere an Kraftfahrzeugwärmeübertragern verbaute Kühlrohre, auch häufig als Sickenrohre bezeichnet, werden oftmals als längsnahtgeschweißte Flachrohre ausgeführt, in welchen geeignete Längssicken bzw. Wülste eingeprägt sind, mittels welchen Trennwände zum Bilden von getrennten Kammern im Inneren der Flachrohre realisiert werden können.

Ein erster diesbezüglicher Wärmeübertrager ist beispielsweise aus der Übersetzung DE 698 21 385 T2 der europäischen Patentschrift EP 1 030 155 B1 bekannt, bei welchem ein Rohr aus einem beidseits lotplattierten Lötblech hergestellt ist. Hierzu sind in dem Lötblech Wülste eingeprägt und das Lötblech ist derart gefaltet, dass sich zwei Lötblechschenkel direkt gegenüber liegen, wodurch das eigentliche Flachrohr gebildet ist. Die Wülste bilden hierbei Trennwände im Inneren des Flachrohrs, wobei ein Wulst eines ersten Lötblechschenkels an dem gegenüberliegenden Lötblechschenkel anliegt. Während eines geeigneten Lötprozesses, bei welchem das Lot an dem Lötblech aufgeschmolzen wird, verbinden sich die aneinander liegenden Bereiche des Lötbleches miteinander. Auf Grund eines ungünstig und/oder unzureichend verlaufenden Lötprozesses besteht jedoch die Gefahr, dass sich ein Wulst nicht ausreichend innig mit dem anliegenden Lötblechschenkel verlötet, wodurch es hinsichtlich der Trennwände zu Undichtigkeiten und/oder insgesamt zu Druckfestigkeitsproblemen an dem Wärmeübertrager kommen kann.

Um dieser Problematik entgegen wirken zu können, ist darüber hinaus aus der Offenlegungsschrift DE 195 10 283 A1 ein Wärmeübertrager mit Flachrohren als Kühlrohre beschrieben, bei welchem die Flachrohre nach innen geprägte Sicken aufweisen, welche ebenfalls Trennwände innerhalb der Flachrohre bilden können. Um zwei sich solcher gegenüberliegender Sicken als Trennwände innerhalb der Flachrohre besonders betriebssicher und speziell flüssigkeits- bzw. gasdicht miteinander zusammenfügen zu können, werden die sich gegenüberliegenden Sicken mittels eines induktiven Warmpressschweißens an ihren Erhebungen miteinander zusammengefügt.

Bei den vorstehend genannten Beispielen besitzen die Flachrohre an ihren jeweiligen Außenseiten zudem eine Lotplattierung, um konstruktiv einfach mit weiteren Bauteilen des Wärmeübertragers, beispielsweise mit Wellrippen, verlötet werden zu können. Ein Verlöten der Bauteile des Wärmeübertragers kann bevorzugt mittels eines gemeinschaftlichen Lötprozesses in einem Schutzgas-Durchlaufofen, etwa unter Verwendung von Flussmittein, durchgeführt werden.

Die EP 1645 830 A1 offenbart ein Rohr mit einer Sicke, bei welchen die Enden des Rohrmaterials nach innen abgebogen sind, so dass sie mit der Sicke verlöten.

Es ist Aufgabe vorliegender Erfindung gattungsgemäße Wärmeübertrager weiterzuentwickeln.

Die Aufgabe der Erfindung wird von einem Wärmeübertrager mit den Merkmalen von Anspruch 1 gelöst.

Weisen die Kühlrohre rohrinnenseitig mehr als eine Beschichtung auf, können die Kühlrohre im Inneren konstruktiv einfach einerseits mit einer korrosionsschützenden Schicht und andererseits mit Lot versehen werden, welches für eine Lötverbindung hinsichtlich einer Innentrennwand erforderlich ist. Hierdurch lässt sich die Herstellung besonders hochwertiger Wärmeübertrager wesentlich vereinfachen. Erfindungsgemäß ist eine der rohrinnenseitigen Beschichtungen nur partiell, dass heißt ausschließlich, im Bereich der wenigstens einen Kühlrohrsicke angeordnet, wodurch die Rohrinnenseite besonders kostengünstig hergestellt werden kann, da nur die erforderlichen Bereiche mit einer weiteren Beschichtung versehen werden.

Idealerweise ist diese weitere Beschichtung rohrinnenseitig nur partiell im Bereich einer später eingeprägten Kühlrohrsicke an dem Bandmaterial bzw. im Bereich einer bereits eingeprägten Kühlrohrsicke eines Kühlrohrs appliziert, um mit einem nur geringen Materialaufwand realisiert werden zu können. Es versteht sich, dass sich diese weitere Beschichtung jedoch auch bis neben die geprägte Kühlrohrsicke erstrecken kann, wenn dies erforderlich erscheint.

Mit dem Begriff "Wärmeübertrager" ist vorliegend jegliche Einrichtung beschrieben, mittels welcher Prozesswärme von einem ersten Medium zu einem weiteren Medium übertragen werden kann, so dass das erste Medium hierbei gekühlt werden kann. Insbesondere werden hierbei Wärmeübertrager von Kraftfahrzeugen erfasst, wie beispielsweise dort eingesetzte Kreuzstromwärmeübertrager, bei welchen beispielsweise zu kühlende Kühlmittel flüssig und/oder gasförmig durch Kühlrohre des Wärmeübertragers geleitet werden, wobei die Kühlrohre zudem mit Kühlrippen in Kontakt stehen können, und bei welchen die Kühlrippen zusätzlich von Umgebungsluft umströmt werden können, so dass die Wärmeenergie aus den Kühlmitteln insbesondere über die Kühlrippen an die Umgebungsluft besonders gut abgeleitet werden kann. Als Kühlmittel können hierbei etwa auch Kältemittel oder sonstige Wärmeenergie transportierende Medien eingesetzt werden.

Der Begriff "Sammelkästen" beschreibt in diesem Zusammenhang jegliche Gebilde, in welche Enden der Kühlrohre des Wärmeübertragers hinein ragen können, und in welche Kühlmittel oder ein Kältemittel in den Wärmeübertrager eingeleitet, ausgeleitet und/oder einfach bzw. mehrfach umgelenkt werden können. Die Sammelkästen sitzen hierbei vorzugsweise seitlich eines zumindest von den Kühlrohren gebildeten Kühlemetzes des Wärmeübertragers und können somit auch einen den Wärmeübertrager begrenzenden Randbereich bilden.

Die "Kühlrohre" verbinden vorliegend die Sammelkästen räumlich miteinander. Damit die Kühlrohre in Richtung ihrer Längserstreckungen mehr als eine Kammer aufweisen können, durch welche hindurch Kühl- oder Kältemittel von einem Sammelkasten zu einem weiteren Sammelkasten gelangen können, können die Kühlrohre in ihrem Inneren mit Trennwänden entsprechend unterteilt sein. Oftmals sind die Kühlrohre als Flachrohre ausgebildet, so dass sie sich besonders gut mittels Trennwände aus Kühlrohrsicken, kurz Sicken, in verschiedene längliche Kammern unterteilen lassen.

Konstruktiv einfach können derartige Trennwände realisiert werden, wenn in einem ein Kühlrohr bildenden Bandmaterial eine oder mehrere Sicken eingeprägt werden. Die Sicken können sich bei geeigneter Faltung des Bandmaterials an ihren Erhebungen gegenüberliegen, so dass die Erhebungen miteinander verlötet werden und hierdurch Trennwände im Inneren der Kühlrohre gebildet werden können.

Des Weiteren beschreibt der Begriff "rohrinnenseitig" eine Kühlmittelseite eines Kühlrohres, an welcher beispielsweise flüssige Kühlmittel durch einen Wärmeübertrager hindurch geleitet werden, wohingegen der Begriff "rohraußenseitig" etwa einen luftseitigen Außenbereich um das Kühlrohr herum beschreibt.

Mit der Bezeichnung "Außenlotplattierung" wird eine Beschichtung des Bandmaterials beschrieben, welche ein Lot, beispielsweise EN AW-4343 bzw. AlSi7.5, umfasst. Derartige Außenlotplattierungen sind hinsichtlich einer Verwendung an Wärmeübertragern gut bekannt, so dass hierauf nicht näher eingegangen wird.

Eine bevorzugte Ausführungsvariante sieht vor, dass eine dem Bandmaterial abgewandte Beschichtung härter ausgebildet ist als eine dem Bandmaterial zugewandte Beschichtung, wodurch vorteilhafter Weise etwa eine härtere Lotplattierung zum Verlöten zweier sich gegenüberliegender Kühlrohrsicken auf einer weicheren Opfer- oder Schutzplattierung angeordnet sein kann.

Erfindungsgemaß weisen die Kühlrohre rohrinnenseitig zum einen eine Opfer- oder Schutzplattierung und zum anderen partiell nur im Bereich der wenigstens einen Kühlrohrsicke eine Innenlotplattierung auf. Es versteht sich, dass die Innenlotplattierung je nach Anwendungsfall auch an allen Kühlrohrsicken eines einzelnen Kühlrohres vorgesehen werden kann.

Die Innenlotplattierung kann ebenfalls wie die Außenlotplattierung ein Lot, wie beispielsweise EN AW-4343 bzw. AlSi7.5 umfassen, wobei die Innenlotplattierung vorteilhafter Weise nur partiell an einer Kühlrohrsicke, im Besonderen ausschließlich entlang einer Kühlrohrsicke, vorgesehen ist. Eine Opferplattierung lässt sich hierbei beispielsweise mittels einer Beschichtung aus einem Werkstoff EN AW-7072 bzw. AlZn1 gut realisieren. Eine Schutzplattierung kann vorzugsweise aus Reinaluminium bestehen. Vorteilhafter Weise kann mittels derartiger Plattierungen kostengünstig insbesondere auch auf gestiegene Kundenanforderungen reagiert werden.

Vorzugsweise umfassen die Außenlotplattierung und/oder die Innenlotplattierung Aluminium-Silizium-Lote, wodurch hochwertige Lötverbindungen gewährleistet werden können.

In diesem Zusammenhang ist es vorteilhaft, wenn die Außenlotplattierung und/oder die Innenlotplattierung ein Siliziumgehalt von 5 % bis 20 %, vorzugsweise von 7 % bis 11 %, aufweisen.

Die Kühlrohre können vorliegend besonders kostengünstig bereit gestellt werden, da die Innenlotplattierung vorteilhafter Weise nur in Bereichen vorgesehen wird, an bzw. in welchen sie tatsächlich erforderlich ist, beispielsweise zum Verlöten einer ersten Kühlrohrsicke und einer zweiten Kühlrohrsicke, welche der ersten Kühlrohrsicke gegenüberliegt. So beschreiben die Begriffe "partiell" bzw. "nur" speziell im Zusammenhang mit dem Begriff "Innenlotplattierung", dass die Innenlotplattierung nicht auf der gesamten Innenseite eines Kühlrohres sondern ausschließlich im Bereich einer Kühlrohrsicke angeordnet ist.

Erstreckt die Innenlotplattierung sich nur in einem Bereich entlang der wenigstens einen Kühlrohrsicke, kann eine Lötverbindung an einer Kühlrohrsicke oder mehreren Kühlrohrsicken mit besonders geringem Materialaufwand hinsichtlich der Innenlotplattierung realisiert werden.

Speziell in diesem Zusammenhang wird die Aufgabe der Erfindung auch von einem Verfahren gemäß Anspruch 10 gelöst.

Die wenigstens eine Kühlrohrsicke wird vorliegend vorzugsweise an oder in das Bandmaterial geprägt. Um ein gebogenes Bandmaterial dauerhaft zu einem Kühlrohr zusammenfügen zu können, kann das Kühlrohr an einer Stoßlängsnaht induktiv warmpressgeschweißt werden.

Es versteht sich, dass die zusätzliche Lotplattierung bzw. die vorliegende Innenlotplattierung mit verschiedenen Techniken auf das Bandmaterial aufgebracht werden kann. Beispielsweise wird die zusätzliche Lotplattierung mittels eines thermischen Spritzverfahrens, mittels eines Kaltgasspritzverfahrens oder mittels eines Lichtbogenspritzverfahrens an dem Bandmaterial appliziert. Da alle Verfahren aus dem Stand der Technik gut bekannt sind, werden diese hier nicht weiter explizit erläutert Es sei jedoch erwähnt, dass sich auch ein Coilcoating-Verfahren zum Applizieren der zusätzlichen Lotplattierung eignet

Die zusätzliche Lotplattierung bzw. die vorliegende Innenlotplattierung kann verfahrenstechnisch besonders einfach an einer Kühlrohrsicke realisiert werden, wenn die zusätzliche Lotplattierung in einem Bereich des Bandmaterials appliziert wird, an welchem anschließend die Kühlrohrsicke an das Bandmaterial geformt bzw. geprägt wird. In die zusätzliche Lotplattierung kann auch ein Flussmittel eingebracht sein, um eine noch bessere Kühlrohrsickenverlötung zu erzielen.

Ist die Opfer- oder Schutzplattierung rohrinnenseitig zwischen dem Bandmaterial und der Innenlotplattierung angeordnet, kann die Opfer- oder Schutzplattierung die gesamte Rohrinnenseite beschichten, während die Innenlotplattierung ausschließlich im Bereich der wenigstens einen Kühlrohrsicke angeordnet ist

Eine besonders vorteilhafte Ausführungsvariante sieht vor, dass die Kühlrohre ausschließlich im Bereich der wenigstens einen Kühlrohrsicke einen Schichtaufbau von Außen nach Innen aus der Außenlotplattierung, dem Bandmaterial, der Opfer- oder Schutzplattierung und der Innenlotplattierung aufweisen. Hierdurch weisen die Kühlrohre lediglich in bestimmten Bereichen einen vierschichtigen Aufbau auf, in welchen dieser vierschichtige Aufbau auch lediglich erforderlich ist, wodurch die vorliegenden Kühlrohre wesentlich einfacher und kostengünstiger hergestellt werden können.

Ein derart partiell vierschichtiger Aufbau kann besonders einfach realisiert werden, wenn das Bandmaterial als ein dreischichtiges Aluminiumbandmaterial bereit gestellt ist. Das dreischichtige Aluminiumbandmaterial besteht beispielsweise aus einem Kernwerkstoff, wie zum Beispiel EN AW-3003 mod., einer luftseitigen Lotplattierung, wie zum Beispiel EN AW-4343, und einer kühlmittelseitigen Opferplattierung, wie zum Beispiel EN AW-7072. An der kühlmittelseitigen Opferplattierung kann dann eine zusätzliche Lotplattierung partiell angebracht werden.

Vorzugsweise wird vorliegend ein Bandmaterial verwendet, welches eine Materialstärke von mehr als 0,03 mm, vorzugsweise von mehr als 0,05 mm, aufweist. Hierdurch können die Kühlrohre ausreichend druckstabil konstruiert werden.

Weist das Bandmaterial eine Materialstärke von weniger als 2 mm, vorzugsweise von weniger als 1 mm, auf, können die Kühlrohre hinsichtlich ihres Gewichts relativ leicht gebaut werden.

Das Bandmaterial kann aus unterschiedlichsten Werkstoffen hergestellt werden. Eine hohe Korrosionsbeständigkeit und/oder ein günstiges Gewicht hinsichtlich des Wärmeübertragers kann erzielt werden, wenn das Bandmaterial aus einem der Werkstoffe Aluminium, Edelstahl oder einer Nickel-Basis-Legierung hergestellt ist.

Weitere Vorteile, Ziele und Eigenschaften vorliegender Erfindung werden anhand nachfolgender Beschreibung anliegender Zeichnung erläutert, in welcher beispielhaft ein Herstellverfahren sowie ein Schichtaufbau eines Kühlrohres eines Wärmeübertragers eines Kraftfahrzeuges dargestellt sind.

Es zeigt
- Figur 1: schematisch ein Verfahrensschema zum partiellen Applizieren eines Lotstreifens auf einem Rohrband zum Sickenrohrverlöten,
- Figur 2: schematisch einen Querschnitt eines dreischichtigen Aluminiumbandes mit einem partiell applizierten zusätzlichen Lotstreifen, und
- Figur 3: schematisch eine Aufsicht des dreischichtigen Aluminiumbandes.

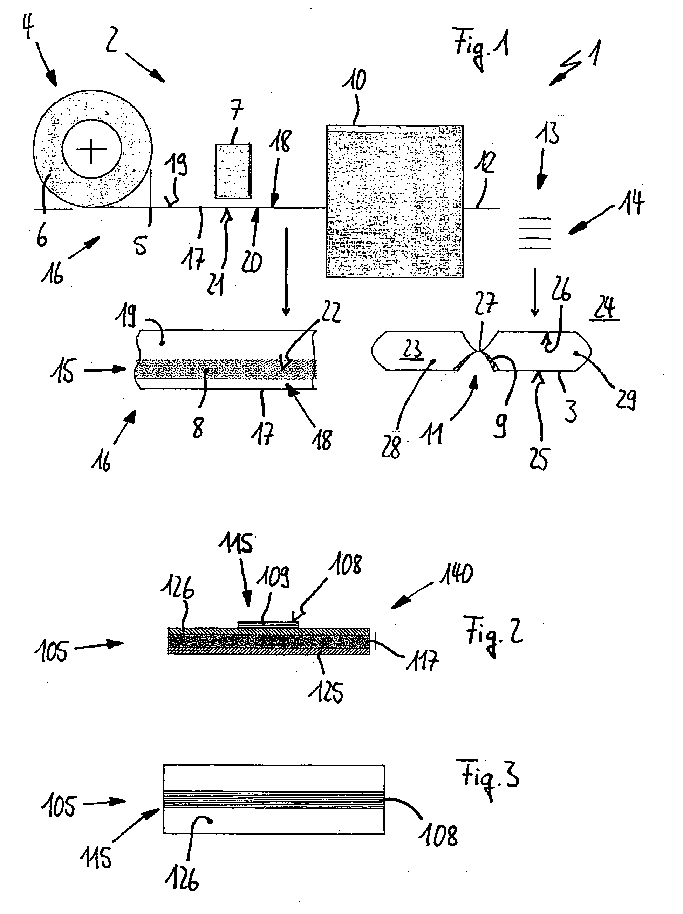

Das in der Figur 1 gezeigte Verfahrensschema 1 illustriert schematisch eine Fertigungsanlage 2 für flache Kühlrohre 3 eines hier nicht gezeigten Wärmeübertragers eines Kraftfahrzeuges. Die Fertigungsanlage 2 besteht im Wesentlichen aus einer Spuleinrichtung 4 zum Abspulen eines Bandmaterials 5 von einem Coil 6, einer Applikationseinrichtung 7 zum partiellen Applizieren eines Lotstreifens 8 in Gestalt einer späteren Innenlotplattierung 9, einer Rohrbearbeitungsmaschine 10, mittels in das Bandmaterial 5 wenigstens eine Kühlrohrsicke 11 eingeprägt und mittels welcher das Bandmaterial 5 zu einem Flachrohrstrang 12 gebogen und zusammengeschweißt werden kann, und einer Ablängeinrichtung 13, mittels welcher der Flachrohrstrang 12 zu einer Vielzahl 14 an flachen Kühlrohren 3 abgelängt werden kann. Vorteilhafter Weise wird der Lotstreifen 8 ausschließlich in einem partiellen Bereich 15 des Bandmaterials 5 aufgetragen, in welchem die Kühlrohrsicke 11 eingeprägt wird. Das Bandmaterial 5 besteht aus einem dreischichtigen Aluminiumbandmaterial 16 mit einem Kernwerkstoff 17, einer ersten Beschichtung 18 auf einer ersten Seite 19 des Kernwerkstoffes 17 und einer zweiten Beschichtung 20 auf einer zweiten Seite 21 des Kernwerkstoffes. Der Lotstreifen 8 bildet hierbei eine weitere Beschichtung 22, welche gemeinsam mit der ersten Beschichtung 18 später hinsichtlich des fertigen flachen Kühlrohrs 3 rohrinnenseitig 23 angeordnet ist. Die zweite Beschichtung 20 befindet sich bei dem flachen Kühlrohr 3 rohraußenseitig 24 und bildet eine Außenlotplattierung 25 an dem flachen Kühlrohr 3. Die erste Beschichtung 18 stellt eine Schutzplattierung 26 für das flache Kühlrohr 3 rohrinnenseitig 23 zur Verfügung.

Bei dem nach diesem Ausführungsbeispiel gezeigten flachen Kühlrohr 3 bilden zwei sich gegenüberliegende Kühlrohrsicken 11 eine Innentrennwand 27 des flachen Kühlrohres 3, wobei materialsparend lediglich eine der Kühlrohrsicken 11 mit einer Innenlotplattierung 9 versehen ist. Die Innentrennwand 27 unterteilt das flache Kühlrohr 3 in eine erste Längskammer 28 und in eine zweite Längskammer 29.

Das in den Figuren 2 und 3 gezeigte Bandmaterial 105 hat vorteilhafter Weise lediglich partiell einen vierschichtigen Schichtaufbau 140, nämlich eine Außenlotplattierung 125, eine Kernschicht 117, eine Schutzplattierung 126 und eine Innenlotplattierung 109, welche als schmaler Lotstreifen 108 auf die Schutzplattierung 126 des Bandmaterials 105 aufgetragen ist. Ein Auftragen des schmalen Lotstreifens 108 kann beispielsweise mittels eines Kaltgasspritzens vorgenommen werden. Hierdurch kann ein Kühlrohr 3 (siehe Figur 1) trotz eines hochwertigen Schichtaufbaus 140 verfahrenstechnisch einfach und kostengünstig hergestellt werden.

Der Lotstreifen 108 ist hierbei lediglich in einem Bereich 115 des Bandmaterials 105 appliziert, in welchem später eine Kühlrohrsicke 11 (siehe Figur 1) eingeprägt wird, so kann der vierschichtige Schichtaufbau 140 vorteilhafter Weise nur partiell in Bereichen 115 vorgesehen werden, in welchen er erforderlich ist.

### Bezugsziffernliste

| | |
|---|---|
| 1 | Verfahrensschema |
| 2 | Fertigungsanlage |
| 3 | flache Kühlrohre |
| 4 | Spuleinrichtung |
| 5 | Bandmaterial |
| 6 | Coil |
| 7 | Applikationseinrichtung |
| 8 | Lotstreifen |
| 9 | Innenlotplattierung |
| 10 | Rohrbearbeitungsmaschine |
| 11 | Kühlrohrsicke |
| 12 | Flachrohrstrang |
| 13 | Ablängeinrichtung |
| 14 | Vielzahl an flachen Kühlrohren |
| 15 | partieller Bereich |
| 16 | Aluminiumbandmaterial |
| 17 | Kernwerkstoff |
| 18 | erste Beschichtung |
| 19 | erste Seite |
| 20 | zweite Beschichtung |
| 21 | zweite Seite |
| 22 | weitere Beschichtung |
| 23 | rohrinnenseitig |
| 24 | rohraußenseitig |
| 25 | Außenlotplattierung |
| 26 | Schutzplattierung |
| 27 | Innentrennwand |
| 28 | erste Längskammer |
| 29 | zweite Längskammer |
| | |
| 105 | Bandmaterial |
| 108 | Lotstreifen |
| 109 | Innenlotplattierung |
| 115 | partieller Bereich |
| 117 | Kernschicht |
| 125 | Außenlotplattierung |
| 126 | Schutzplattierung |
| 140 | vierschichtiger Schichtaufbau |

## Patentansprüche

1. Wärmeübertrager, insbesondere Wärmeübertrager eines Kraftfahrzeuges, mit Kühlrohren (3) und mit Sammelkästen, bei welchem sich die Kühlrohre (3) zwischen den Sammelkästen erstrecken, bei welchem die Kühlrohre (3) und die Sammelkästen räumlich miteinander verbunden sind, bei welchem die Kühlrohre (3) aus einem Bandmaterial (5; 105) mit wenigstens einer Kühlrohrsicke (11) hergestellt sind, bei welchem die wenigstens eine Kühlrohrsicke (11) eine Innentrennwand (27) des Kühlrohres (3) bildet, und bei welchem die Kühlrohre (3) rohraußenseitig (24) eine Außenlotplattierung (25) aufweisen, wobei die Kühlrohre (3) rohrinnenseitig (23) mehr als eine Beschichtung (18, 22) aufweisen, wobei eine (22) der rohrinnenseitigen (23) Beschichtungen (18, 22) nur partiell im Bereich (15; 115) der wenigstens einen Kühlrohrsicke (11) angeordnet ist, ***dadurch gekennzeichnet, dass*** die Kühlrohre (3) rohrinnenseitig (23) zum einen eine Opfer-oder Schutzplattierung (26; 126) und zum anderen partiell nur im Bereich (15; 115) der wenigstens einen Kühlrohrsicke (11) eine darauf aufgebrachte Innenlot-plattierung (9; 109) aufweisen und die Innenlotplattierung (9; 109) sich nur in einem Bereich (15; 115) entlang der wenigstens einen Kühlrohrsicke (11) erstreckt.

2. Wärmeübertrager nach einem der vorhergehenden Ansprüche, ***dadurch gekennzeichnet, dass*** die Opfer- oder Schutzplattierung (26; 126) rohrinnenseitig (23) zwischen dem Kernwerkstoff (5; 105) und der Innenlotplattierung (9; 109) angeordnet ist.

3. Wärmeübertrager nach einem der vorhergehenden Ansprüche, ***dadurch gekennzeichnet, dass*** die Kühlrohre (3) ausschließlich im Bereich (15; 115) der wenigstens einen Kühlrohrsicke (11) einen Schichtaufbau (140) von Außen nach Innen aus der Außenlotplattierung (25; 125), dem Kernwerkstoff (5; 105), der Opfer- oder Schutzplattierung (26; 126) und der Innenlotplattierung (9; 109) aufweisen.

4. Wärmeübertrager nach einem der vorhergehenden Ansprüche, ***dadurch gekennzeichnet, dass*** das Bandmaterial (5; 105) als ein dreischichtiges Aluminiumbandmaterial bereit gestellt ist.

5. Wärmeübertrager nach einem der vorhergehenden Ansprüche, ***dadurch gekennzeichnet, dass*** das Bandmaterial (5; 105) eine Materialstärke von mehr als 0,03 mm, vorzugsweise von mehr als 0,05 mm, aufweist.

6. Wärmeübertrager nach einem der vorhergehenden Ansprüche, **da*durch gekennzeichnet, dass*** das Bandmaterial (5; 105) eine Materialstärke von weniger als 2 mm, vorzugsweise von weniger als 1 mm, aufweist.

7. Wärmeübertrager nach einem der vorhergehenden Ansprüche, ***dadurch gekennzeichnet, dass*** das Bandmaterial (5; 105) aus einem der Werkstoffe Aluminium, Edelstahl oder einer Nickel-Basis-Legierung hergestellt ist.

8. Wärmeübertrager nach einem der vorhergehenden Ansprüche, ***dadurch gekennzeichnet, dass*** die Außenlotplattierung (25; 125) und/oder die Innenlotplattierung (9; 109) Aluminium-Silizium-Lote umfassen.

9. Wärmeübertrager nach einem der vorhergehenden Ansprüche, ***dadurch gekennzeichnet, dass*** die Außenlotplattierung (25; 125) und/oder die Innenlotplattierung (9; 109) ein Siliziumgehalt von 5 % bis 20 %, vorzugsweise von 7 % bis 11 %, aufweisen.

10. Verfahren zum Herstellen eines Kohlrohres eines Wärmeübertragers nach zumindest einem der vorhergehenden Ansprüche 1 bis 9; bei welchem ein Bandmaterial (5; 105) mit wenigstens einer Kühlrohrsicke (11) versehen und bei welchem das Bandmaterial (5; 105) zu einem Kühlrohr (3) mit wenigstens einer Kühlrohrsicke (11) gebogen sowie zusammengefügt wird, ***dadurch gekennzeichnet, dass*** ausschließlich im Bereich (15; 115) der wenigstens einen Kühlrohrsicke (11) eine zusätzliche Lotplattierung (9; 109) auf einer Opfer-oder Schutzplattierung (5; 105) aufgetragen wird, so dass mittels der zusätzlichen Lotplattierung (9; 109) an einer Kühlrohrinnenseite (23) des Kühlrohres (3) zwei sich gegenüberliegende Bandmaterialbereiche miteinander verlötet werden können.

11. Verfahren nach Anspruch 10, ***dadurch gekennzeichnet, dass*** die zusätzliche Lotplattierung (9; 109) mittels eines thermischen Spritzverfahrens, mittels eines Kaltgasspritzverfahrens oder mittels eines Lichtbogenspritzens an dem Bandmaterial (5; 105) appliziert wird.

12. Verfahren nach Anspruch 10 oder 11, ***dadurch gekennzeichnet, dass*** die zusätzliche Lotplattierung (9) in einem Bereich (15; 115) des Bandmaterials (5; 105) appliziert wird, an welchem anschließend die Kühlrohrsicke (11) an das Bandmaterial (5; 105) geformt wird.

## Claims

1. A heat exchanger, in particular a heat exchanger of a motor vehicle, comprising cooling tubes (3) and comprising collecting tanks, in which the cooling tubes (3) extend between the collecting tanks, in which the cooling tubes (3) and the collecting tanks are spatially interconnected, in which the cooling tubes (3) are produced from a strip material (5; 105) having at least one cooling tube bead (11), in which the at least one cooling tube bead (11) forms an inner partition wall (27) of the cooling tube (3), and in which the cooling tubes (3) have an outer solder plating (25) on the outside (24), wherein the cooling tubes (3) have more than one coating (18, 22) on their inside (23), wherein one (22) of the coatings (18, 22) on the tube inside (23) is only partially disposed in the area (15; 115) of the at least one cooling tube bead (11), **characterized in that** the cooling tubes (3), on the one hand, have a sacrificial or protective plating (26; 126) on the tube inside (23) and, on the other hand, have an inner solder plating (9; 109) applied partially only in the area (15; 115) of the at least one cooling tube bead (11), and the inner solder plating (9; 109) extends along the at least one cooling tube bead (11) only in one area (15; 115).

2. The heat exchanger according to one of the preceding claims, **characterized in that** the sacrificial or protective plating (26; 126) on the tube inside (23) is disposed between the core material (5; 105) and the inner solder plating (9; 109).

3. The heat exchanger according to one of the preceding claims, **characterized in that** the cooling tubes (3) have a layer structure (140) from the outside to the inside formed from the outer solder plating (25; 125), the core material (5; 105), the sacrificial or protective plating (26; 126) and the inner solder plating (9; 109), exclusively in the area (15; 115) of the at least one cooling tube bead (11).

4. The heat exchanger according to one of the preceding claims, **characterized in that** the strip material (5; 105) is provided in the form of a three-layer aluminum strip material.

5. The heat exchanger according to one of the preceding claims, **characterized in that** the strip material (5; 105) has a material thickness of more than 0.03 mm, preferably of more than 0.05 mm.

6. The heat exchanger according to one of the preceding claims, **characterized in that** the strip material (5; 105) has a material thickness of less than 2 mm, preferably of less than 1 mm.

7. The heat exchanger according to one of the preceding claims, **characterized in that** the strip material (5; 105) is produced from one of the materials of aluminum, stainless steel or a nickel-based alloy.

8. The heat exchanger according to one of the preceding claims, **characterized in that** the outer solder plating (25; 125) and/or the inner solder plating (9; 109) include/includes aluminum/silicon solders.

9. The heat exchanger according to one of the preceding claims, **characterized in that** the outer solder plating (25; 125) and/or the inner solder plating (9; 109) have/has a silicon content of 5 % to 20 %, preferably of 7 % to 11 %.

10. A method for producing a cooling tube of a heat exchanger according to at least one of the preceding claims 1 to 9, in which a strip material (5; 105) is provided with at least one cooling tube bead (11), and in which the strip material (5; 105) is bent and joined together to form a cooling tube (3) having at least one cooling tube bead (11), **characterized in that** an additional solder plating (9; 109) is applied to a sacrificial or protective plating (5; 105) exclusively in the area (15; 115) of the at least one cooling tube bead (11), such that two mutually opposed areas of the strip material can be soldered to each other by means of the additional solder plating (9; 109) on an inside (23) of the cooling tube (3).

11. The method according to claim 10, **characterized in that** the additional solder plating (9; 109) is applied to the strip material (5; 105) by means of a thermal spraying method, by means of a cold-gas spraying method or by means of an arc spraying method.

12. The method according to claim 10 or 11, **characterized in that** the additional solder plating (9) is applied in an area (15; 115) of the strip material (5; 105) in which the cooling tube bead (11) is then formed on the strip material (5; 105).

## Revendications

1. Echangeur de chaleur, en particulier échangeur de chaleur d'un véhicule à moteur, comprenant des tubes de refroidissement (3) et comprenant des bacs collecteurs, échangeur de chaleur dans lequel les tubes de refroidissement (3) s'étendent entre les bacs collecteurs, dans lequel les tubes de refroidissement (3) et les bacs collecteurs sont physiquement reliés les uns aux autres, dans lequel les tubes de refroidissement (3) sont fabriqués à partir d'un matériau en bande (5; 105) comportant au moins une nervure en creux (11) des tubes de refroidissement, dans lequel la nervure en creux (11) - au moins au nombre de un - des tubes de refroidissement forme une paroi de séparation intérieure (27) du tube de refroidissement (3), et dans lequel les tubes de refroidissement (3) présentent, sur le côté extérieur (24) des tubes, un placage extérieur (25) réalisé avec une brasure, où les tubes de refroidissement (3) présentent, sur le côté intérieur (23) des tubes, plus d'un revêtement (18, 22), où l'un (22) des revêtements (18, 22), sur le côté intérieur (23) des tubes, est disposé seulement de façon partielle dans la zone (15; 115) de la nervure en creux (11) - au moins au nombre de un - des tubes de refroidissement, **caractérisé en ce que** les tubes de refroidissement (3) présentent, sur le côté intérieur (23) des tubes, d'une part un placage sacrificiel ou de protection (26; 126) et, d'autre part, en partie seulement dans la zone (15; 115) de la nervure en creux (11) - au moins au nombre de un - des tubes de refroidissement, un placage intérieur (9; 109) réalisé avec une brasure et appliqué sur ledit placage sacrificiel ou de protection, et le placage intérieur (9; 109) réalisé avec une brasure s'étend seulement dans une zone (15; 115), le long de la nervure en creux (11) - au moins au nombre de un - des tubes de refroidissement.

2. Echangeur de chaleur selon l'une ou l'autre des revendications précédentes, **caractérisé en ce que** le placage sacrificiel ou de protection (26; 126) est disposé, sur le côté intérieur (23) des tubes, entre le matériau formant l'âme (5; 105) et le placage intérieur (9; 109) réalisé avec une brasure.

3. Echangeur de chaleur selon l'une ou l'autre des revendications précédentes, **caractérisé en ce que** les tubes de refroidissement (3) présentent, exclusivement dans la zone (15; 115) de la nervure en creux (11) - au moins au nombre de un - des tubes de refroidissement, une structure en couches (140) se composant, de l'extérieur vers l'intérieur, du placage extérieur (25; 125) réalisé avec une brasure, du matériau formant l'âme (5; 105), du placage sacrificiel ou de protection (26; 126) et du placage intérieur (9; 109) réalisé avec une brasure.

4. Echangeur de chaleur selon l'une quelconque des revendications précédentes, **caractérisé en ce que** le matériau en bande (5; 105) est fourni comme un matériau en bande d'aluminium se composant de trois couches.

5. Echangeur de chaleur selon l'une quelconque des revendications précédentes, **caractérisé en ce que** le matériau en bande (5; 105) présente une épaisseur de matériau de plus de 0,03 mm, de préférence de plus de 0,05 mm.

6. Echangeur de chaleur selon l'une quelconque des revendications précédentes, **caractérisé en ce que** le matériau en bande (5; 105) présente une épaisseur de matériau de moins de 2 mm, de préférence de moins de 1 mm.

7. Echangeur de chaleur selon l'une quelconque des revendications précédentes, **caractérisé en ce que** le matériau en bande (5; 105) est fabriqué à partir de l'un des matériaux tels que l'aluminium, un acier spécial ou un alliage à base de nickel.

8. Echangeur de chaleur selon l'une quelconque des revendications précédentes, **caractérisé en ce que** le placage extérieur (25; 125) réalisé avec une brasure et/ou le placage intérieur (9; 109) réalisé avec une brasure comprennent des brasures d'aluminium et de silicium.

9. Echangeur de chaleur selon l'une quelconque des revendications précédentes, **caractérisé en ce que** le placage extérieur (25; 125) réalisé avec une brasure et/ou le placage intérieur (9; 109) réalisé avec une brasure présentent une teneur en silicium comprise entre 5 % et 20 %, de préférence entre 7 % et 11 %.

10. Procédé de fabrication d'un tube de refroidissement d'un échangeur de chaleur selon au moins l'une quelconque des revendications précédentes 1 à 9, procédé dans lequel un matériau en bande (5; 105) est doté d'au moins une nervure en creux (11) des tubes de refroidissement et dans lequel le matériau en bande (5; 105) est recourbé et assemblé pour former un tube de refroidissement (3) comportant au moins une nervure en creux (11) des tubes de refroidissement, **caractérisé en ce qu'**un placage supplémentaire (9; 109) réalisé avec une brasure est appliqué sur un placage sacrificiel ou de protection (5; 105) exclusivement dans la zone (15; 115) de la nervure en creux (11) - au moins au nombre de un - des tubes de refroidissement, de sorte que deux zones de matériau en bande se faisant face peuvent être brasées l'une à l'autre sur un côté intérieur (23) du tube de refroidissement (3), au moyen du placage supplémentaire (9; 109) réalisé avec une brasure.

11. Procédé selon la revendication 10, **caractérisé en ce que** le placage supplémentaire (9; 109) réalisé avec une brasure est appliqué sur le matériau en bande (5; 105), au moyen d'un procédé de pulvérisation thermique, au moyen d'un procédé de pulvérisation d'un gaz froid ou bien au moyen d'une pulvérisation à l'arc électrique.

12. Procédé selon la revendication 10 ou 11, **caractérisé en ce que** le placage supplémentaire (9) réalisé avec une brasure est appliqué dans une zone (15; 115) du matériau en bande (5; 105), zone dans laquelle la nervure en creux (11) des tubes de refroidissement est formée ensuite sur le matériau en bande (5; 105).
